(19) Europäisches Patentamt
European Patent Office
Office européen des brevets

(11) EP 3 262 099 B1

(12) # EUROPÄISCHE PATENTSCHRIFT

(45) Veröffentlichungstag und Bekanntmachung des Hinweises auf die Patenterteilung:
**10.06.2020 Patentblatt 2020/24**

(21) Anmeldenummer: **16705785.0**

(22) Anmeldetag: **23.02.2016**

(51) Int Cl.:
***C08G 64/34*** (2006.01) ***C08G 18/76*** (2006.01)
***C08G 18/40*** (2006.01) ***C08G 18/44*** (2006.01)
***C08G 18/48*** (2006.01)

(86) Internationale Anmeldenummer:
**PCT/EP2016/053699**

(87) Internationale Veröffentlichungsnummer:
**WO 2016/135109 (01.09.2016 Gazette 2016/35)**

(54) **VISKOELASTISCHE POLYURETHANWEICHSCHAUMSTOFFE BASIEREND AUF POLYETHERCARBONATPOLYOLEN**

VISCOELASTIC POLYURETHANE SOFT FOAMS BASED ON POLYETHER CARBONATE POLYOLS

MOUSSES DE POLYURÉTHANE VISCOÉLASTIQUES À BASE DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2015 EP 15157033**

(43) Veröffentlichungstag der Anmeldung:
**03.01.2018 Patentblatt 2018/01**

(73) Patentinhaber: **Covestro Deutschland AG**
**51373 Leverkusen (DE)**

(72) Erfinder:
- **KLESCZEWSKI, Bert**
**51069 Köln (DE)**
- **RAUWALD, Urs**
**40593 Düsseldorf-Benrath (DE)**
- **HOFMANN, Jörg**
**47800 Krefeld (DE)**

(74) Vertreter: **Levpat**
**c/o Covestro AG**
**Gebäude 4825**
**51365 Leverkusen (DE)**

(56) Entgegenhaltungen:
**WO-A1-2014/074706 US-A1- 2005 038 222**

- **Jason M Anderson ET AL: "Renewable Footwear Systems Based on Polyols Derived from Waste Carbon Dioxide", , 2012, XP055205882, Gefunden im Internet: URL:https://www.huntsmanservice.com/polyurethanes/Media Library/a_MC1CD1F5AB7BB1738E040EBCD2B6B01F 1/Products_MC1CD1F5AB8081738E040EBCD2B6B01 F1/files/CPI2012 Huntsman-Novomer Revised 08142012.pdf [gefunden am 2015-08-03]**
- **Cpi 2013 September ET AL: "CATALYZING GREEN CHEMISTRY CATALYZING GREEN CHEMISTRY CO 2 -based Polycarbonate Polyols as Strength Enhancers in Flexible Foams", , September 2013 (2013-09), XP055205870, Gefunden im Internet: URL:http://dev-novomer.gotpantheon.com/sites/default/files/PPC in Flex Foams_0.pdf [gefunden am 2015-08-03]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 262 099 B1

## Beschreibung

Die vorliegende Erfindung betrifft ein Verfahren zur Herstellung viskoelastischer Polyurethanschaumstoffen, vorzugsweise viskoelastischer Polyurethanweichschaumstoffe, durch Reaktion einer Isocyanat-Komponente mit einer gegenüber Isocyanaten reaktiven Komponente, die mindestens ein Polyethercarbonatpolyol umfasst. Die Erfindung betrifft weiterhin durch das erfindungsgemäße Verfahren hergestellte Polyurethanschaumstoffe und deren Verwendung.

Im Rahmen einer umweltfreundlichen Ausrichtung von Produktionsprozessen ist es generell wünschenswert, $CO_2$-basierte Ausgangsstoffe einzusetzen, beispielsweise in Form von Polyethercarbonatpolyolen. Eine derartige Anwendung ist beispielsweise aus der WO 2014/074706 A1 bekannt. Darin sind viskoelastische Polyurethanschaumstoffe offenbart, die unter Einsatz einer Polyolkomponente erzeugt werden, die 2 bis 50 Gew.-% an Polyethercarbonatpolyolen enthält. Die damit erzeugten Schaumstoffe zeichnen sich speziell bei hohem Anteil an Polyethercarbonatpolyolen durch eine vergleichsweise hohe Härte aus, was insbesondere für viskoelastische Weichschaumstoffe als nachteilig empfunden wird. Zudem neigen die eingesetzten Polyolmischungen aus den Polyethercarbonatpololen und herkömmlichen Polyetherpolyolen zur Entmischung, was Probleme bei der Schaumherstellung mit sich bringt.

Die Aufgabe der vorliegenden Erfindung bestand darin, eine Möglichkeit anzugeben, wie viskoelastische Polyurethan(weich)schaumstoffe unter Einsatz CO2-basierter Ausgangsstoffe erzeugt werden können, die eine zufriedenstellende Weichheit auch für PU-Weichschaumanwendungen besitzen.

Diese Aufgabe wird gelöst durch ein Verfahren zur Herstellung viskoelastischer Polyurethanschaumstoffe durch Umsetzung einer Komponente A enthaltend

- A1 ≥ 50 bis ≤ 100 Gew.-Teile mindestens eines Polyethercarbonatpolyols mit einer Hydroxylzahl gemäß DIN 53240 von ≥ 150 mg KOH/g bis ≤ 300 mg KOH/g,
- A2 ≤ 50 bis ≥ 0 Gew.-Teile mindestens eines Polyetherpolyols mit einer Hydroxylzahl gemäß DIN 53240 von ≥ 20 mg KOH/g bis ≤ 250 mg KOH/g, wobei das Polyetherpolyol frei von Carbonateinheiten ist,
- A3 0,5 bis 25 Gew.-Teile, bezogen auf die Summe der Gew.-Teile der Komponenten A1 und A2, Wasser und/oder physikalische Treibmittel,
- A4 0 bis 10 Gew.-Teile, bezogen auf die Summe der Gew.-Teile der Komponenten A1 und A2, wenigstens eines Antioxidans,
- A5 0 bis 10 Gew.-Teile, bezogen auf die Summe der Gew.-Teile der Komponenten A1 und A2, Hilfs- und Zusatzstoffe,

mit einer Komponente B enthaltend

- B Di- und/oder Polyisocyanate, wobei es sich um 2,4- und/oder 2,6-TDI und/oder modifizierte Polyisocyanate, die sich von 2,4- und/oder 2,6-TDI ableiten, oder Mischungen dieser Isocyanate mit anderen Di- und/oder Polyisocyanaten handelt,

wobei die Umsetzung der Komponente A mit der Komponente B bei einer Isocyanat-Kennzahl von 70 bis 130 durchgeführt wird und wobei alle Gewichtsteilangaben der Komponenten A1 bis A5 so normiert sind, dass die Summe der Gewichtsteile A1 + A2 in der Zusammensetzung 100 ergibt.

Der Erfindung liegt die Erkenntnis zugrunde, dass bei Einsatz von 50 bis 100 Gew.-Teilen eines Polyethercarbonatpolyols mit einer Hydroxylzahl gemäß DIN 53240 von ≥ 150 mg KOH/g bis ≤ 300 mg KOH/g trotz des hohen Gehalts an Polyethercarbonatpolyolen weiche viskoelastische Polyurethanschaumstoffe erzeugt werden können. Das heißt, die erfindungsgemäß erzeugten Polyurethan(weich)schaumstoffe zeigen gerade nicht den aus dem Stand der Technik bekannten Härtezuwachs mit steigendem Anteil an Polyethercarbonatpolyolen. Mit der erfindungsgemäßen hohen Einsatzmenge an Polyethercarbonatpolyolen ist zugleich eine vergleichsweise hohe Einbaumenge an Kohlendioxid im Schaumstoff verbunden, was die vorstehend genannten umwelttechnischen Vorteile mit sich bringt.

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die mit dem erfindungsgemäßen Verfahren erzeugten Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Weitere Gegenstände der Erfindung sind ein nach diesen Verfahren hergestellter Polyurethanschaumstoff, ein nach diesen Verfahren hergestellter Polyurethanweichblockschaumstoff bzw. Polyurethanweichformschaumstoff, sowie die Verwendung der Polyurethanweichschaumstoffe zur Herstellung von Formteilen sowie die Formteile selbst.

Unter einem viskoelastischen Polyurethanschaumstoff oder Polyurethanweichschaumstoff wird ein Schaum

verstanden, der eine niedrige Kugel-Ruckprallelastizität gemaß DIN EN ISO 8307.2007 besitzt Danach wird eine Kugel aus definierter Höhe auf einen Schaumstoffprufkorper fallen gelassen und die Höhe gemessen, m welche die Kugel entgegen der Fallrichtung wieder hochspringt. Die Ruckspring-Höhe wird in prozentuale Relation zur Fallhohe gesetzt. Dabei bedeutet ein niedriger prozentualer Wert eine niedrige Rückprallelastizität. Im Idealfall springt die Kugel nach dem Aufprall nicht mehr messbar hoch, was bedeutet, dass die Kugel-Rückprallelastizitat 0% beträgt In vorteilhafter Ausgestaltung des erfindungsgemäßen Verfahrens wird ein viskoelastischer Polyurethanschaumstoff oder Polyurethanweichschaumstoff erhalten, der eine Kugel-Rückpiallelastizität gemäß DIN EN ISO 8307·2007 von 0 % bis 20 % aufweist, insbesondere von 0 % bis 15 %, vorzugsweise 0 % bis 10 % oder gar 0 % bis 8 % Ebenfalls bevorzugt sind Polyurethanschaumstoffe oder Polyurethanweichschaumstoffe mit einer Kugel-Rückprallelastizitat gemäß DIN EN ISO 8307.2007 von 2 % bis 20 %, insbesondere von 2 % bis 15 %.

Ein besonders bevorzugter Polyurethanschaumstoff oder Polyurethanweichschaumstoff, der durch das erfindungsgemaße Verfahren erhältlich ist, ist ein solcher, für dessen Herstellung ein Polyethercarbonatpolyol A1 mit einer Hydroxylzahl gemäß DIN 53240 von > 250 mg KOH/g bis ≤ 300 mg KOH/g eingesetzt wird. Solch ein Polyurethanschaumstoff oder Polyurethanweichschaumstoff zeichnet sich durch besonders gute viskoelastische Eigenschaften, also eine besonders niedrige Kugel-Ruckprallelastizitat gemäß DIN EN ISO 8307.2007 aus Dabei weist das eingesetzte Polyethercarbonatpolyol A1 insbesondere eine durchschnittliche OH-Funktionalitat von 2,5 bis 3,5 auf, vorzugsweise von 2,7 bis 3,3, weiter bevorzugt von 2,9 bis 3,1.

Ein weiterer Gegenstand der vorliegenden Erfindung betrifft die Verwendung einer Polyolkomponente umfassend oder bestehend aus mindestens einem Polyethercarbonatpolyol A1 mit einer Hydroxylzahl gemäß DIN 53240 von ≥ 150 mg KOH/g bis ≤ 300 mg KOH/g und mindestens emem Polyetherpolyol A2 mit einer Hydroxylzahl gemäß DIN 53240 von ≥ 20 mg KOH/g bis ≤ 250 mg KOH/g, das frei von Carbonateinheiten ist und einer Komponente B enthaltend Di- und/oder Polyisocyanate, wobei es sich um 2,4- und/oder 2,6-TDI und/oder modifizierte Polyisocyanate, die sich von 2,4- und/oder 2,6-TDI ableiten, oder Mischungen dieser Isocyanate mit anderen Di- und/oder Polyisocyanaten handelt,, zur Herstellung von viskoelastischen Polyurethanschaumstoffen, wobei die Polyolkomponente ≥ 50 bis ≤ 100 Gew.-% des Polyethercarbonatpolyols A1 und ≤ 50 bis ≥ 0 Gew -% des Polyetherpolyols A2 enthält. Dabei ist es besonders vorteilhaft, wenn abgesehen von dem Polyethercarbonatpolyol A1 die Polyolkomponente kein anderes organisches Polyol enthalt beziehungsweise bei der Herstellung der Polyurethanschaumstoffe auch keine weiteren organischen Polyole eingesetzt werden, die nicht unter die Definition des Polyethercarbonatpolyols A1 fallen Auch bei dieser erfindungsgemäßen Verwendung ist es vorteilhaft, ein Polyethercarbonatpolyol A1 mit einer Hydroxylzahl gemäß DIN 53240 von > 250 mg KOH/g bis ≤ 300 mg KOH/g einzusetzen, da hierdurch ein Polyurethanschaumstoff oder Polyurethanweichschaumstoff mit besonders guten viskoelastischen Eigenschaften erhalten werden. Dabei weist das eingesetzte Polyethercarbonatpolyol A1 wiederum insbesondere eine durchschnittliche OH-Funktionalität von 2,5 bis 3,5 auf, vorzugsweise von 2,7 bis 3,3, weiter bevorzugt von 2,9 bis 3,1.

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Der Begriff "Polyurethan(weich)schaumstoff" steht als Kurzform für einen Polyurethanschaumstoff jedweder Art, insbesondere Polyurethanhartschaumstoff und Polyurethanweichschaumstoff.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240 von ≥ 150 mg KOH/g bis ≤ 300 mg KOH/g, vorzugsweise von ≥ 170 mg KOH/g bis ≤ 290 mg KOH/g, besonders bevorzugt von ≥ 180 mg KOH/g bis ≤ 280 mg KOH/g. Ebenfalls bevorzugt ist es, dass das Polyethercarbonatpolyol A1 eine Hydroxylzahl gemäß DIN 53240 von > 250 mg KOH/g bis ≤ 300 mg KOH/g aufweist. Die vorgenannten Polyethercarbonatpolyole sind beispielsweise erhältlich durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 und ≤ 4, besonders bevorzugt ≥ 2 und ≤ 3. Unter "H-funktionell" wird im Sinne der Erfindung eine Starterverbindung verstanden, die gegenüber Alkoxylierung aktive H-Atome aufweist. Als hydroxyfunktionelles Startermolekül kann beispielsweise Trimethylolpropan, Glycerin und/oder Propylenglykol und/oder Sorbitol verwendet werden. Die Hydroxylzahl kann gemäß DIN 53240 bestimmt werden.

Vorzugsweise erfolgt die Copolymerisation von Kohlendioxid und einem oder mehreren Alkylenoxiden in Gegenwart mindestens eines Multimetallcyanid-Katalysators oder Doppelmetallcyanid-Katalysators (DMC-Katalysator).

Vorzugsweise weisen die erfindungsgemäß eingesetzten Polyethercarbonatpolyole zwischen den Carbonatgruppen auch Ethergruppen auf, was in Formel (I) schematisch dargestellt wird. In dem Schema gemäß Formel (I) steht

R für einen organischen Rest wie Alkyl, Alkylaryl oder Aryl, der jeweils auch Heteroatome wie beispielsweise O, S, Si usw. enthalten kann, e und f stehen für ganze Zahlen. Das im Schema gemäß Formel (I) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (I) gezeigte Polyethercarbonatpolyol beschränkt ist. In Bezug auf Formel (I) bedeutet dies, dass das Verhältnis von e/f bevorzugt von 2 : 1 bis 1 : 20, besonders bevorzugt von 1,5 : 1 bis 1 : 10 beträgt.

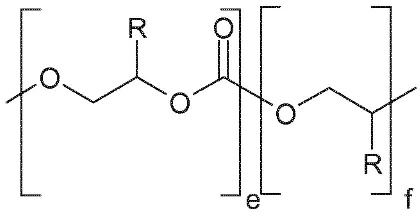

(I)

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach der Formel (II) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (II)$$

Der Gewichtsanteil (in Gew.-%) polymer-gebundenen Carbonats (LC') in der Reaktionsmischung wurde nach Formel (III) berechnet:

$$LC' = \frac{[F(5{,}1-4{,}8) - F(4{,}5)] * 102}{N} * 100\% \qquad (III)$$

Darin ergibt sich der Wert für N ("Nenner" N) nach Formel (IV) wie folgt:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (IV)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (V) berechnet,

$$CC' = \frac{F(4,5) * 102}{N} * 100\% \qquad (V)$$

wobei sich der Wert für N nach Formel (IV) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des CO2-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A1, indem:

($\alpha$) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Allgemein konnen zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, $D_1$- und Triglyceride, epoxidierte Fettsäuren, $C_1$-$C_{24}$-Ester von epoxidierten Fettsauren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidylioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltriisopropoxysilan Vorzugsweise werden als Alkylenoxide Ethylenoxid und/oder Propylenoxid und/oder 1,2 Butylenoxid, besonders bevorzugt Propylenoxid eingesetzt

In einer bevorzugten Ausführungsform der Erfindung liegt der Anteil an Ethylenoxid an der insgesamt eingesetzten Menge an Propylenoxid und Ethylenoxid $\geq$ 0 und $\leq$ 90 Gew.-%, bevorzugt $\geq$ 0 und $\leq$ 50 Gew -% und besonders bevorzugt frei von Ethylenoxid.

Als geeignete H-funktionelle Startsubstanz konnen Verbindungen mit für die Alkoxylierung aktiven H-Atomen

eingesetzt werden Für die Alkoxylierung aktive Gruppen mit aktiven H-Atomen sind beispielsweise -OH, -$NH_2$ (primäre Amine), -NH- (sekundäre Amine), -SH und - $CO_2H$, bevorzugt sind -OH und -$NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z B sogenannte Jeffamine® von Huntsman, wie z. B. D-230, D-400, D-2000, T-403, T-3000, T-5000 oder entsprechende Produkte der BASF, wie z. B. Polyetheramm D230, D400, D200, T403, T5000), Polytetrahydrofurane (z. B. PolyTHF® der BASF, wie z B PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusol, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des weiteren können als H-funktionelle Startersubstanzen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (VI),

$$HO-(CH_2)_x-OH \qquad (VI)$$

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von $\geq 2$ bis $\leq 3$.

In einer bevorzugten Ausführungsform der Erfindung ist das Polyethercarbonatpolyol A1 durch Anlagerung von Kohlendioxid und Alkylenoxiden an H-funktionelle Startersubstanzen unter Verwendung von Multimetallcyanid-Katalysatoren oder Doppelmetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Startersubstanzen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von $\leq$ 1 Gew.-%, vorzugsweise in einer Menge von $\leq$ 0,5 Gew.-%, besonders bevorzugt in einer Menge von $\leq$ 500 ppm und insbesondere in einer Menge von $\leq$ 300 ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von $\geq$ 2,0 und $\leq$ 30,0 Gew.-%, bevorzugt von $\geq$ 5,0 und $\leq$ 28,0 Gew.-% und besonders bevorzugt von $\geq$ 10,0 und $\leq$ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 150 mg KOH/g bis ≤ 300 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermolekül, wie beispielsweise Trimethylolpropan und/oder Glycerin und/oder Propylenglykol und/oder Sorbitol. Die Hydroxylzahl kann gemäß DIN 53240 bestimmt werden.

Nach einer weiteren bevorzugten Ausgestaltung des erfindungsgemäßen Verfahrens wird ein Polyethercarbonatpolyol A1 eingesetzt, dass Blöcke gemäß Formel (I) mit einem Verhältnis e/f von 2 : 1 bis 1 : 20 aufweist, insbesondere von 1,5 : 1 bis 1 : 10.

Im Rahmen des erfindungsgemäßen Verfahrens ist es bevorzugt, dass die Komponente A ≥ 55 bis ≤ 100 Gew.-Teile des Polyethercarbonatpolyols A1 und ≤ 45 bis ≥ 0 Gew.-Teile des Polyetherpolyols A2 enthält, insbesondere ≥ 60 bis ≤ 100 Gew.-Teile des Polyethercarbonatpolyols A1 und ≤ 40 bis ≥ 0 Gew.-Teile des Polyetherpolyols A2.

In einer weiteren Ausführungsform der Erfindung wird Komponente A1 zu 100 Gew.-Teilen, die Komponente A2 zu 0 Gew.-Teilen und abgesehen von A1 keine weiteren organischen Polyole eingesetzt.

In einer weiteren Ausführungsform des erfindungsgemäßen Verfahrens enthält Komponente A ≥ 50 bis < 100 Gew.-Teile des Polyethercarbonatpolyols A1 und ≤ 50 bis > 0 Gew.-Teile des Polyetherpolyols A2, bevorzugt ≥ 55 bis < 100 Gew.-Teile des Polyethercarbonatpolyols A1 und ≤ 45 bis > 0 Gew.-Teile des Polyetherpolyols A2 enthält, besonders bevorzugt ≥ 60 bis < 100 Gew.-Teile des Polyethercarbonatpolyols A1 und ≤ 40 bis > 0 Gew.-Teile des Polyetherpolyols A2, ganz besonders bevorzugt ≥ 80 bis < 100 Gew.-Teile des Polyethercarbonatpolyols A1 und ≤ 20 bis > 0 Gew.-Teile des Polyetherpolyols A2, und noch mehr bevorzugt ≥ 95 bis < 100 Gew.-Teile des Polyethercarbonatpolyols A1 und ≤ 5 bis > 0 Gew.-Teile des Polyetherpolyols A2.

Im Rahmen der vorliegenden Erfindung ist es besonders bevorzugt, dass das Polyethercarbonatpolyol A1 eine durchschnittliche OH-Funktionalität von 2,5 bis 3,5 aufweist, insbesondere von 2,7 bis 3,3, vorzugsweise von 2,9 bis 3,1, weiter bevorzugt 2,95 bis 3,05, ganz besonders bevorzugt etwa 3,0. Polyethercaronatpolyole mit solchen OH-Funktionalitäten und den erfindungsgemäßen Hydroxylzahlen liefern besonders weiche viskoelastische Polyurethanschäume selbst bei hohen Einsatzmengen an Polyethercarbonatpolyolen.

Komponente A2

Die Komponente A2 umfasst Polyetherpolyole mit einer Hydroxylzahl gemaß DIN 53240 von ≥ 20 mg KOH/g bis ≤ 250 mg KOH/g, vorzugsweise von ≥ 20 bis < 112 mg KOH/g und besonders bevorzugt ≥ 20 mg KOH/g bis ≤ 80 mg KOH/g und ist frei von Carbonateinheiten Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) konnen Alkylenoxide mit 2 bis 24 Kohlenstoffatomen eingesetzt werden Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, $C_1$-$C_{24}$-Ester von epoxidierten Fettsauren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltriisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide konnen dem Reaktionsgemisch einzeln, im Gemisch oder nacheinander zugeführt werden Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitaten von ≥ 2 bis ≤ 6 auf und sind vorzugsweise hydroxyfunktionell (OH-funktionell) Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen vorzugsweise einen Gehalt von ≥ 0 bis ≤ 40 Gew.-%, besonders bevorzugt ≥ 0 bis ≤ 25 Gew.-% an Ethylenoxid auf.

Komponente A3

Als Komponente A3 werden 0,5 bis 25 Gew.-Teile 0,5 bis 25 Gew.-Teile, bevorzugt 1,0 bis 15 Gew. Teile, besonders bevorzugt 1,5 bis 10 Gew.-Teile, bezogen auf die Summe der Gew.-Teile der Komponenten A1 und A2, Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente A3 eingesetzt.

Komponente A4

Antioxidantien, die in der Herstellung von Polyurethan-Weichschaumstoffen eingesetzt werden können sind dem Fachmann an sich bekannt. Solche Verbindungen werden beispielsweise in EP-A 1874853, G. Oertel (Hrsg.): "Kunststoff-Handbuch", Band VII, Carl-Hanser-Verlag, München, Wien 1993, Kapitel 3.4.8 oder in Ullmanns's Encyclopedia of Industrial Chemistry Peter P. Klemchuck, 2012, Vol. 4, S. 162 ff, Wiley VCH-Verlag beschrieben.

Nach einer bevorzugten Ausgestaltung des erfindungsgemäßen Verfahrens umfasst die Komponente A4 ein Antioxidans A4.1, welches frei von Verbindungen mit Aminogruppen ist, und ein Antioxidans A4.2, welches mindestens eine Verbindung mit einer oder mehreren Aminogruppen umfasst, verwendet.

In weiter vorteilhafter Ausgestaltung des erfindungsgemäßen Verfahrens enthält die Komponente A4 als Komponente A4.1 0,02 - 5,0 Gew.-Teile, bezogen auf die Summe der Gew.-Teile der Komponenten A1 und A2, eines Antioxidans enthält, welches frei von Aminogruppen ist, und als Komponente A4.2 0,02 - 5,0 Gew.-Teile, bezogen auf die Summe der Gew.-Teile der Komponenten A1 und A2, eines Antioxidans, welches mindestens eine Verbindung mit einer oder mehreren Aminogruppen umfasst, wobei der Gesamtgehalt der Komponente A4 insbesondere 0,04 - 10,0 Gew.-Teile, bezogen auf die Summe der Gewichtsteile der Komponente A1 und A2, beträgt.

Bei dem erfindungsgemäßen Verfahren kann ferner das Antioxidans A4.1 und A4.2 jeweils in einer Menge von 0,05 - 1,5 Gew.-Teile, bezogen auf die Summe der Gewichtsteile der Komponente A1 und A2, enthalten sein, wobei der Gesamtgehalt der Komponente A4 insbesondere 0,1 - 3,0 Gew.-Teile, bezogen auf die Summe der Gewichtsteile der Komponente A1 und A2, beträgt

Antioxidantien A4.1, die frei von Aminogruppen sind, umfassen Verbindungen, enthaltend

i) Phenol-Derivate
ii) Lactone, insbesondere Benzofuran-2-on-derivate
iii) Phosphor-Derivate,

sowie beliebige Gemische dieser Verbindungen.

Verbindungen enthaltend Phenol-Derivate i) sind beispielsweise 2,6-Di-(t-butyl)-p-cresol (BHT), Tetrakis[methylen(3,5-di-t-butyl-4-hydroxyhydrocinnamat)]methan, 2,2'-Methylenebis-(4-methyl-6-t-butylphenol), 2,6-Di-t-butyl-4-methylphenol, N,N'-1,6-hexamethylen-bis-3-(3,5-di-t-butyl-4-hydroxyphenyl)propionamid, Alkyl-3-(3,5-di-t-butyl-4-hydroxyphenylpropionat) wobei Alkyl einen Kohlenstoffrest mit C1 bis C24, vorzugsweise C1 bis C20, besonders bevorzugt C1 bis C18 umfasst, Ethylen-(bisoxyethylen)bis-(3,(5-t-butylhydroxy-4-tolyl)-propionat 4,4'-Butylidenbis-(6-t-butyl-3-methylphenol) und/oder Tocopherole wie beispielsweise α-Tocopherol, β-Tocopherol, γ-Tocopherol, δ-Tocopherol und deren Mischungen (Vitamin E), bevorzugt sind 2,6-Di-(t-butyl)-p-cresol (BHT), Tetrakis [methylen(3,5-di-t-butyl-4-hydroxyhydrocinnamat)]methan, Alkyl-3 -(3,5-di-t-Butyl-4-hydroxyphenylpropionat), wobei Alkyl einen Kohlenstoffrest mit C1 bis C24, vorzugsweise C1 bis C20, besonders bevorzugt C1 bis C18 umfasst, Octadecyl-3-(3,5-di-t-butyl-4-hydroxyphenylpropionat), α-Tocopherol, β-Tocopherol, γ-Tocopherol und/oder δ-Tocopherol.

Aminfreie Lactone ii) insbesondere Benzofuranone sind beispielsweise in EP-A 1291384 und DE-A 19618786 beschrieben. Bevorzugte Benzofuranone sind beispielsweise 5,7-Di-t-butyl-3-phenyl-benzofuran-2-on, 5,7-Di-t-butyl-3-(3,4-dimethylphenyl)-benzofuran-2-on, 5,7-Di-t-butyl-3-(2,3-dimethylphenyl)-benzofuran-2-on und/oder 5-t-Octyl-3 -(2-acetyl-5-t-octylphenyl)-benzofuran-2-on.

Antioxidantien iii) sind beispielsweise Phosphite und Phosphonite. Diese sind beispielsweise beschrieben in EP-A 905180 und EP-A 1874853 wie z.B. Triphenylphosphit, Diphenylalkylphosphit, Phenyldialkylphosphit, Tris(nonylphenyl)phosphit, Trilaurylphosphit, Trioctadecylphosphit, Distearylpentaerythritol-diphosphit, Tris(2,4-di-t-butylphenyl)phosphit, Diisodecylpentaerythritoldiphosphit, Bis(2,4-di-t-butylphenyl)pentaerythritoldiphosphit, Bis(2,6-di-t-butyl-4-methylphenyl)-pentaerythritol-diphosphit, Bisisodecyloxypenta-erythritoldiphosphit, Bis(2,4-di-t-butyl-6-methylphenyl)penta-erythritoldiphosphit, Bis(2,4,6-tri-t-butylphenyl)pentaerythritoldiphosphit, Tristearylsorbitol-triphosphit, Tetrakis(2,4-di-t-butylphenyl)4,4'-biphenylendiphosphonit, 6-Isooctyloxy-2,4,8,10-tetra-t-butyl-12H-dibenzo[d,g]-1,3,2-dioxaphosphocin, 6-Fluoro-2,4,8,10-tetra-t-butyl-12-methyldibenzo[d,g]-1,3,2-dioxaphosphocin, Bis(2,4-di-t-butyl-6-methylphenyl)methyl-phosphit und/oder Bis(2,4-di-t-butyl-6-methylphenyl)ethylphosphit.

Antioxidantien A4.2, welche mindestens eine Verbindung mit einer oder mehreren Aminogruppen umfassen,

sind in der Regel sekundäre Amine der Formel (VII)

HNR1R2 (VII),

worin R1 C1-C18 Alkyl, Phenyl-C1-C4-alkyl, C-5-C12-Cycloalkyl, Phenyl, Naphthyl, Phenyl oder Naphthyl von denen jedes substituiert ist durch C1-C12 Alkyl oder C1-C12 Alkoxy oder Benzyl oder α,α-Dimethylbenzyl, entspricht, und R2 Phenyl, Naphthyl, Phenyl oder Naphthyl, von denen jedes substituiert ist durch C1-C12 Alkyl oder C1-C12 Alkoxy oder Benzyl oder α,α-Dimethylbenzyl, entspricht.

Geeignete Antioxidantien A4.2 sind beispielsweise N,N'-Di-isopropyl-p-phenylendiamin, N,N'-Di-sec-butyl-p-phenylendiamin, N, N'-Bis(1,4-dimethyloentyl)-p-phenylen-diamin, N, N'-Bis(1-ethyl-3-methylpentyl)-p-phenylendiamin, N,N'-Bis(1-methylheptyl)-p-phenylendiamin, N,N'-Dicyclohexxyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Metl-iylheptyl)-N-phenyl-p-phenylendiamin, N-Cyclohexyl-N'-phenyl-p-phenylendiamin, 4-(p-Toluensulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-phenyl-1-naphthylamin, N-(4-t-Octylphenyl)-1-naphthylamin, N-Phenyl-2-naphthylamin, octyliertes Diphenylamin, beispielsweise p,p'-Di-t-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-t-butyl-4-dimethylaminomethylphenol, 2,4' -Diaminodiphenylmethan, 4,4' -Diaminodiphenylmethan, N,N,N' ,N' -Tetramethyl-4,4' -diaminodiphenylmethan, 1 ,2-Bis [(2-methylphenyl)amino]ethan, 1,2-Bis(phenylamino)propan, (o-Tolyl)biguanid, Bis[4-(1',3'-dimethylbutyl)phenyl]amin, t-octyliertes N-phenyl-1-naphthylamin, eine Mischung von mono- und dialkylierten t-Butyl/t-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylaminen, 2,3-Dihydro-3,3-dimethyl-4H-1,4-benzothiazin, Phenothiazin, eine Mischung aus mono- und dialkylierten t-Butyl/t-Octylphenothiazinen, eine Mischung aus mono- und dialkylierten t-Octyl-phenothiazinen, N-Allylphenothiazin und/oder N,N,N',N'-Tetraphenyl-1,4-diaminobut-2-en, bevorzugt ist eine Mischung von mono- und dialkylierten t-Butyl/t-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylaminen.

In einer bevorzugten Ausführungsform des erfindungsgemäßen Verfahrens umfasst das Antioxidans A4.1, welches frei von Aminogruppen ist, Verbindungen enthaltend

i) Phenol-Derivate,
ii) Lactone
iii) Phosphor-Derivate,

sowie beliebige Gemische dieser Verbindungen, und
das Antioxidans A4.2 mindestens eine Verbindung mit einer oder mehreren sekundären Aminogruppen.

Es kann weiterhin vorgesehen sein, dass das Antioxidans A4.1 mindestens ein Phenol-Derivat i) und das Antioxidans A4.2 mindestens eine Verbindung der Formel

HNR1R2 (VII),

umfasst, in der R1 C1-C18 Alkyl, Phenyl-C1-C4-alkyl, C5-C12-Cycloalkyl, Phenyl, Naphthyl, Phenyl oder Naphthyl von denen jedes substituiert ist durch C1-C12 Alkyl oder C1-C12 Alkoxy oder Benzyl oder α,α-Dimethylbenzyl, und R2 Phenyl, Naphthyl, Phenyl oder Naphthyl, von denen jedes substituiert ist durch C1-C12 Alkyl oder C1-C12 Alkoxy oder Benzyl oder α,α-Dimethylbenzyl entsprechen.

In einer weiteren Ausführungsform werden Antioxidans A4.1 in einer Menge von 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2, und Antioxidans A4.2 in einer Menge von 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2 eingesetzt.

In einer weiteren Ausführungsform erfolgt das erfindungsgemäße Verfahren in Gegenwart von

A4.1 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2, mindestens einer Verbindung ausgewählt aus der Gruppe bestehend aus 2,6-Di-(t-butyl)-p-cresol (BHT), Tetrakis[methylen(3,5-di-t-butyl-4-hydroxyhydrocinnamat)]methan, 2,2'-Methylenebis-(4-methyl-6-t-butylphenol), 2,6-Di-t-butyl-4-methylphenol, N,N'-1,6-hexametliylen-bis-3-(3,5-di-t-butyl-4-hydroxyphenyl)propionamid, Alkyl-3-(3,5-di-t-butyl-4-hydroxyphenylpropionat) wobei Alkyl einen Kohlenstoffrest mit C1 bis C24, vorzugsweise C1 bis C20, besonders bevorzugt C1 bis C18 umfasst, Ethylen-(bisoxyethylen)bis-(3,(5-t-butylhydroxy-4-tolyl)-propionat 4,4'-Butylidenbis-(6-t-butyl-3-methylphenol) und/oder Tocopherole wie beispielsweise α-Tocopherol, β-Tocopherol, γ-Tocopherol, δ-Tocopherol und deren Mischungen (Vitamin E),

und

A4.2 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2, mindestens einer Verbindung ausgewählt aus der Gruppe bestehend aus N,N'-Diisopropyl-p-phenylendiamin, N,N'-Di-sec-butyl-p-phenylendiamin, N, N'-Bis(1,4-dimethyloentyl)-p-phenylen-diamin, N, N'-Bis(1-ethyl-3-methylpentyl)-p-phenylendiamin, N,N'-Bis(1-methylheptyl)-p-phenylendiamin, N,N'-Dicyclohexxyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluensulfamoyl)diphenylamin, N,N'-Dimethyl-N,N' -di-sec-butyl-p-phenylendiamin, Diphenylamin, N-Allyldiphenylamin, 4-Isopropoxydiphenylamin, N-phenyl-1 -naphthylamin, N-(4-t-Octylphenyl)-1-naphthylamin, N-Phenyl-2-naphthylamin, octyliertes Diphenylamin, beispielsweise p,p'-Di-t-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-t-butyl-4-dimethylaminomethylphenol, 2,4'-Diaminodiphenylmethan, 4,4' -Diaminodiphenylmethan, N,N,N' ,N' -Tetramethyl-4,4' - diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, t-octyliertes N-phenyl-1-naphthylamin, eine Mischung von mono- und dialkylierten t-Butyl/t-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylaminen, 2,3-Dihydro-3,3-dimethyl-4H-1,4-benzothiazin, Phenothiazin, eine Mischung aus mono- und dialkylierten t-Butyl/t-Octylphenothiazinen, eine Mischung aus mono- und dialkylierten t-Octyl-phenothiazmen, N-Allylphenothiazin und/oder N,N,N',N'-Tetraphenyl-1,4-diammobut-2-en

In einer weiteren Ausführungsform erfolgt das erfindungsgemaße Verfahren in Gegenwart von

A4.1 0,02 - 3,0 Gew.-Teile, bevorzugt 0,04 - 2,0 Gew -Teile, besonders bevorzugt 0,05 - 1,5 Gew.-Teile, bezogen auf die Summe der Gew-Teile der Komponenten A1 und A2, mindestens einer Verbindung ausgewahlt aus der Gruppe bestehend aus 2,6-Di-(t-butyl)-p-cresol (BHT), Tetrakis[methylen(3,5-di-t-butyl-4-hydroxyhydrocinnamat)]-methan, Alkyl-3-(3,5-di-t-Butyl-4-hydioxyphenylpropionat), wobei Alkyl einen Kohlenstoffrest mit C1 bis C18 umfasst, Octadecyl-3-(3,5-di-t-butyl-4-hydroxyphenylpropionat), α-Tocopherol, β-Tocopherol, γ-Tocopherol und/oder δ-Tocopherol,

und

A4 2 0,02 - 3,0 Gew -Teile, , bevorzugt 0,04 - 2,0 Gew.-Teile, besonders bevorzugt 0,05 - 1,5 Gew -Teile, bezogen auf die Summe der Gew.-Teile der Komponenten A1 und A2, mindestens einer Verbindung ausgewählt aus der Gruppe bestehend aus mono-und dialkylierten t-Butyl/tert-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylammen

Komponente A5

Als Komponente A5 werden 0 bis 10 Gew -Teile an Hilfs- und Zusatzstoffen eingesetzt, insbesondere 0,1 bis 8,0 Gew.-Teile, bevorzugt 0,1 bis 7,5 Gew.-Teile, besonders bevorzugt 0,15 bis 7,0 Gew.-Teile, jeweils bezogen auf die Summe der Gew.-Teile der Komponenten A1 und A2 Als Hilfs- und Zusatzstoffe im Sinne des erfindungsgemäßen Verfahrens kommen beispielsweise folgende Komponenten in Betracht, die einzeln oder in beliebiger Kombination verwendet werden können:

a) Katalysatoren,

b) oberflächenaktive Zusatzstoffe, wie Emulgatoren und Schaumstabilisatoren insbesondere solche mit niedriger Emission, wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, feste Flammschutzmittel, (wie beispielsweise Melamin und/oder Ammoniumpolyphosphat), flüssige Flammschutzmittel (z.B. halogenhaltigewie beispielsweise Tris (2-chlorpropyl)phosphat oder halogenfreie, z.B. auf Basis oligomerer Phosphate, wie sie z.B. in EP 2687534 und US 4382042 beschrieben sind), weitere Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinn(II)-ethylhexanoat, Zinnricinoleat) eingesetzt.

Komponente B

Als Di- und/oder Polyisocyanate können 2,4- und/oder 2,6-TDI und/oder modifizierte Polyisocyanate, die sich von 2,4- und/oder 2,6-TDI ableiten, oder Mischungen dieser Isocyanate mit anderen Di- und/oder Polyisocyanaten in dem erfindungsgemäßen Verfahren eingesetzt werden.

Unter modifizierten Polyisocyanaten, die sich von 2,4- und/oder 2,6-TDI ableiten, sind TDIbasierte Polyisocyanate mit z.B. Carbodiimidgruppen, Urethangruppen, Allophanatgruppen, Isocyanuratgruppen, Harnstoffgruppen oder Biuretgruppen zu verstehen.

Unter "anderen" Di- und/oder Polyisocyanaten sind aliphatische, cycloaliphatische, araliphatische, aromatische und heterocyclische Di- und/oder Polyisocyanate zu verstehen, wie sie z.B. von W. Siefken in Justus Liebigs Annalen der Chemie, 562, Seiten 75 bis 136, beschrieben werden, beispielsweise solche der Formel (VIII)

$$Q(NCO)_n, \qquad (VIII)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten. Beispielsweise handelt es sich um solche Polyisocyanate, wie sie in der EP-A 0 007 502, Seiten 7 - 8, beschrieben werden.

Vorzugsweise wird als Isocyanatkomponente B 2,4- und/oder 2,6-Toluylendiisocyanat und/oder modifizierte Polyisocyanate, die sich von 2,4- und/oder 2,6-TDI ableiten, besonders bevorzugt 2,4-und/oder 2,6-Toluylendiisocyanat eingesetzt.

In einer weiteren Ausführungsform des erfindungsgemäßen Verfahrens umfasst die Isocyanat-Komponente B ein Toluylendiisocyanat- Isomerengemisch aus 55 bis 90 Gew.-% 2,4- und 10 bis 45 Gew.-% 2,6-TDI.

In einer weiteren Ausführungsform des erfindungsgemäßen Verfahrens beträgt die Kennzahl ≥ 70 bis ≤ 130, vorzugsweise ≥ 85 bis ≤ 125, besonders bevorzugt ≥ 90 bis ≤ 120. Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an IsocyanatGruppen (NCO)-Menge an:

$$\text{Kennzahl} = [\text{Isocyanat-Menge eingesetzt}) : (\text{Isocyanat-Menge berechnet}) \cdot 100 \qquad (IX)$$

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise für Dachhimmel, Türseitenverkleidungen, Sitzauflagen und für Bauelemente.

Die erfindungsgemäß erzeugten viskoelastischen Polyurethanschaumstoffe und Polyurethanweichschaumstoffe zeigen typischerweise geringere Verfärbungstendenzen während der Lagerung an der Luft sowie unter dem Einfluss von Licht, insbesondere UV-Licht.

Die erfindungsgemäßen Weichschäume weisen eine Rohdichte gemäß DIN EN ISO 3386-1 im Bereich von ≥ 10 bis ≤ 120 kg/m$^3$, bevorzugt ≥ 12 bis ≤ 65 kg/m$^3$ auf.

Die vorliegende Erfindung wird im Folgenden anhand von Ausführungsbeispielen erläutert.

**Beispiele**

Polyol A1-1: trifunktionelles Polyethercarbonatpolyol auf Basis Glycerin mit Hydroxylzahl 238 mg KOH/g, erhalten durch Copolymerisation von 7 Gew.-% Kohlendioxid mit 93 Gew.-% Propylenoxid

Polyol A1-2: trifunktionelles Polyetherpolyol auf Basis Glycerin mit Hydroxylzahl 235 mg KOH/g, erhalten durch Polymerisation von 100 Gew.-% Propylenoxid

Polyol A1-3: trifunktionelles Polyetherpolyol Basis Glycerin mit Hydroxylzahl 37 mg KOH/g, erhalten durch Polymerisation von 25 Gew.-% Propylenoxid mit 75 % Ethylenoxid

Polyol A1-4: trifunktionelles Polyetherpolyol Basis Glycerin mit Hydroxylzahl 28 mg KOH/g, erhalten durch Polymerisation von 85 Gew.-% Propylenoxid mit 15 % endständigem Ethylenoxid

Polyol A2-1: trifunktionelles Polyetherpolyol auf Basis Glycerin mit Hydroxylzahl 48 mg KOH/g, erhalten durch Copolymerisation von 10 Gew.-% Ethylenoxid mit 90 Gew.-% Propylenoxid.

A5-1 (Stabilisator): Siloxan-basierter Schaumstabilisator Tegostab® BF 2370, (Evonik Goldschmidt GmbH, Essen)

A5-2 (Stabilisator): Siloxan-basierter Schaumstabilisator Niax® L-626, (Momentive Performance Materials GmbH, Leverkusen)

Isocyanat B1: Gemisch aus 80 Gew.-% 2,4- und 20 Gew.-% 2,6-Toluylendiisocyanat, erhältlich unter dem Namen Desmodur® T 80, (Covestro Deutschland AG, Leverkusen)

Isocyanat B2: MDI-Isomerengemisch mit einem NCO-Gehalt von 32.0 %, erhältlich unter dem Namen Desmodur® 10WB94, (Covestro Deutschland AG, Leverkusen)

A5-3 (Katalysator): Dabco® NE 300, Aminkatalysatorgemisch, (Air Products GmbH, Hamburg)

A5-4 (Katalysator): Dabco® NE 500, Aminkatalysatorgemisch, (Air Products GmbH, Hamburg)

A5-5 (Katalysator): Zinn(II)-ethylhexanoat, erhältlich als Dabco® T-9, (Air Products GmbH, Hamburg)

A5-6 (Katalysator): Addocat 105, Aminkatalysator (*Rhein Chemie* Rheinau GmbH, Mannheim)

A5-7 (Katalysator): Addocat 108, Aminkatalysator (*Rhein Chemie* Rheinau GmbH, Mannheim)

A5-8: (Stabilisator): Siloxan-basierter Schaumstabilisator Tegostab® B 8681, (Evonik Goldschmidt GmbH, Essen)

Die Hydroxylzahl wurde gemäß DIN 53240 bestimmt.

Es wurden Polyurethanschäume gemäß den in der nachfolgenden Tabelle 1 angegebenen Rezepturen hergestellt.
Aufgeführt sind die Anteile der Komponenten in Gewichts-Teilen.

Die Rohdichte und Stauchhärte wurden gemäß DIN EN ISO 3386-1 bestimmt.
Zugfestigkeit und Zugfestigkeit wurden gemäß DIN EN ISO 1798 bestimmt.
Druckverformungsrest wurde gemäß DIN EN ISO 1856 bestimmt.
Die Kugel-Rückprallelastizität wurde gemäß DIN EN ISO 8307:2007 bestimmt.

**Tabelle 1:** Polyurethan-Weichschaumstoffe

| **Beispiel** | 1 | 2 | 3 (Vgl.) | 4 (Vgl.) | 5 (Vgl.) | 6 (Vgl.) |
|---|---|---|---|---|---|---|
| A1-1 | 60 | 60 | | | 44 | |
| A1-2 | | | 60 | 60 | | 44 |
| A1-3 | | | | | 33 | 33 |
| A1-4 | | | | | 23 | 23 |
| A2-1 | 40 | 40 | 40 | 40 | | |
| A5-1 | 0,40 | 0,40 | 0,40 | 0,40 | | |
| A5-2 | 0,80 | 0,80 | 0,80 | 0,80 | | |
| A5-3 | 0,20 | 0,20 | 0,20 | 0,20 | | |
| A5-4 | 0,40 | 0,40 | 0,40 | 0,40 | | |
| A5-5 | 0,02 | 0,02 | 0,02 | 0,02 | | |
| A5-6 | | | | | 0,35 | 0,35 |
| A5-7 | | | | | 0,16 | 0,16 |
| A5-8 | | | | | 0,20 | 0,20 |
| | | | | | | |
| A3 (Wasser) | 1,70 | 1,70 | 1,70 | 1,70 | 2,00 | 2,00 |
| | | | | | | |
| | | | | | | |
| Isocyanat B1 | 37,6 | 41,8 | 37,4 | 41,5 | | |
| Isocyanat B2 | | | | | 46,70 | 46,20 |
| NCO-Index | 90 | 100 | 90 | 100 | 80 | 80 |
| Rohdichte [kg $m^{-3}$] | 54 | 51,8 | 52,3 | 53,6 | | 49,2 |
| Stauchhärte bei 40 % Verformung [kPa] | 1,60 | 3,99 | 1,81 | 41,8 | | 1,96 |
| Zugfestigkeit [kPa] | 83 | 171 | 60 | 127 | | 45 |
| Bruchdehnung [%] | 235 | 180 | 182 | 169 | | 124 |
| Druckverformungsrest bei 50% Verformung [%] | 2,6 | 1,6 | 2,6 | 1,5 | | 1,4 |
| Kugel-Rückprallelastizität gemäß DIN EN ISO 8307: 2007 [%] | 7 | 10 | 6 | 10 | | 14 |
| Bemerkung | | | | | Schaum -kollaps | |

Die Beispiele 1 und 2 sind erfindungsgemäße Beispiele, die Beispiele 3 und 4 sind Vergleichsbeispiele. Die Ergebnisse belegen, dass bei erfindungsgemäßer Verwendung von Polyethercarbonatpolyolen und ansonsten identischer Rezeptur bei gleichem NCO-Index Schaumstoffe mit leicht verringerter Stauchhärte erhalten werden, die bessere mechanische Eigenschaften, insbesondere hinsichtlich Zugfestigkeit und Bruchdehnung, aufweisen als die Vergleichsschaumstoffe gemäß Beispielen 3 und 4.

Die Beispiele 5 und 6 sind ebenfalls Vergleichsbeispiele. Sie belegen, dass die erfindungsgemäßen Polyethercarbonatpolyol-basierten Polyurethanschaumstoffe nur unter Verwendung von TDI, bzw. TDI-basierten Polyisoycanaten erhältlich sind, nicht jedoch unter Verwendung von reinem MDI beispielsweise.

## Patentansprüche

1. Verfahren zur Herstellung viskoelastischer Polyurethanschaumstoffe durch Umsetzung einer Komponente A enthaltend

   A1 ≥ 50 bis ≤ 100 Gew.-Teile mindestens eines Polyethercarbonatpolyols mit einer Hydroxylzahl gemäß DIN 53240 von ≥ 150 mg KOH/g bis ≤ 300 mg KOH/g,
   A2 ≤ 50 bis ≥ 0 Gew.-Teile mindestens eines Polyetherpolyols mit einer Hydroxylzahl gemäß DIN 53240 von ≥ 20 mg KOH/g bis ≤ 250 mg KOH/g, wobei das Polyetherpolyol frei von Carbonateinheiten ist,
   A3 0,5 bis 25 Gew.-Teile, bezogen auf die Summe der Gew.-Teile der Komponenten A1 und A2, Wasser und/oder physikalische Treibmittel,
   A4 0 bis 10 Gew.-Teile, bezogen auf die Summe der Gew.-Teile der Komponenten A1 und A2, wenigstens eines Antioxidans,
   A5 0 bis 10 Gew.-Teile, bezogen auf die Summe der Gew.-Teile der Komponenten A1 und A2, Hilfs- und Zusatzstoffe,

   mit einer Komponente B enthaltend

   B Di- und/oder Polyisocyanate, wobei es sich um 2,4- und/oder 2,6-TDI und/oder modifizierte Polyisocyanate, die sich von 2,4-und/oder 2,6-TDI ableiten, oder Mischungen dieser Isocyanate mit anderen Di- und/oder Polyisocyanaten handelt,

   wobei die Umsetzung der Komponente A mit der Komponente B bei einer Isocyanat-Kennzahl von 70 bis 130 durchgeführt wird und wobei alle Gewichtsteilangaben der Komponenten A1 bis A5 so normiert sind, dass die Summe der Gewichtsteile A1 + A2 in der Zusammensetzung 100 ergibt.

2. Verfahren nach Anspruch 1, **dadurch gekennzeichnet, dass** die Komponente A ≥ 55 bis ≤ 100 Gew.-Teile des Polyethercarbonatpolyols A1 und ≤ 45 bis ≥ 0 Gew.-Teile des Polyetherpolyols A2 enthält, insbesondere ≥ 60 bis ≤ 100 Gew.-Teile des Polyethercarbonatpolyols A1 und ≤ 40 bis ≥ 0 Gew.-Teile des Polyetherpolyols A2.

3. Verfahren nach Anspruch 1 oder 2, **dadurch gekennzeichnet, dass** 100 Gew.-Teile A1, 0 Gew.-Teile A2 und abgesehen von A1 keine weiteren organischen Polyole eingesetzt werden.

4. Verfahren nach einem der vorstehenden Ansprüche, **dadurch gekennzeichnet, dass** das Polyethercarbonatpolyol A1 eine Hydroxylzahl gemäß DIN 53240 von > 250 mg KOH/g bis ≤ 300 mg KOH/g aufweist.

5. Verfahren nach einem der vorstehenden Ansprüche, **dadurch gekennzeichnet, dass** das Polyethercarbonatpolyol A1 eine durchschnittliche OH-Funktionalität von 2,5 bis 3,5 aufweist, insbesondere von 2,7 bis 3,3, vorzugsweise von 2,9 bis 3,1.

6. Verfahren nach einem der vorstehenden Ansprüche, **dadurch gekennzeichnet, dass** das Polyethercarbonatpolyol A1 erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden in Gegenwart eines oder mehrerer H-funktioneller Startermoleküle mit einer durchschnittlichen Funktionalität von ≥ 1 bis ≤ 6, bevorzugt ≥ 1 bis ≤ 4, besonders bevorzugt ≥ 2 bis ≤ 3, wobei das Polyethercarbonatpolyol A1 insbesondere erhältlich ist unter Verwendung von Multimetallcyanid-Katalysatoren oder Doppelmetallcyanid-Katalysatoren.

7. Verfahren nach einem der vorstehenden Ansprüche, **dadurch gekennzeichnet, dass** das Polyethercarbonatpolyol A1 erhältlich ist unter Verwendung von Ethylenoxid und/oder Propylenoxid, insbesondere unter Verwendung von Propylenoxid.

8. Verfahren nach einem der vorstehenden Ansprüche, **dadurch gekennzeichnet, dass** das Polyethercarbonatpolyol A1 Blöcke gemäß Formel (I) mit einem Verhältnis e/f von 2 : 1 bis 1 : 20 aufweist

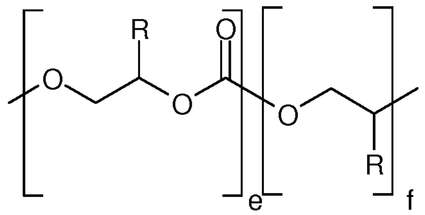

(I),

insbesondere von 1,5 : 1 bis 1 : 10.

**9.** Verfahren nach einem der vorstehenden Ansprüche, **dadurch gekennzeichnet, dass** der viskoelastische Polyurethanschaumstoff ein Polyurethanweichschaumstoff ist, der insbesondere eine Kugel-Rückprallelastizität gemäß DIN EN ISO 8307:2007 von 0 % bis 20 % aufweist, insbesondere von 0 % bis 15 %.

**10.** Verfahren nach einem der vorstehenden Ansprüche, **dadurch gekennzeichnet, dass** die Komponente A4 als Komponente A4.1 0,02 - 5,0 Gew.-Teile, bezogen auf die Summe der Gew.-Teile der Komponenten A1 und A2, eines Antioxidans enthält, welches frei von Aminogruppen ist, und als Komponente A4.2 0,02 - 5,0 Gew.-Teile, bezogen auf die Summe der Gew.-Teile der Komponenten A1 und A2, eines Antioxidans, welches mindestens eine Verbindung mit einer oder mehreren Aminogruppen umfasst, wobei der Gesamtgehalt der Komponente A4 insbesondere 0,04 - 10,0 Gew.-Teile, bezogen auf die Summe der Gewichtsteile der Komponente A1 und A2, beträgt.

**11.** Verfahren nach Anspruch 10, **dadurch gekennzeichnet, dass** das Antioxidans A4.1

i) Phenol-Derivate,
ii) Lactone
iii) Phosphor-Derivate

sowie beliebige Gemische dieser Verbindungen,
und das Antioxidans A4.2
mindestens eine Verbindung mit einer oder mehreren sekundären Aminogruppen umfasst.

**12.** Verfahren nach einem der vorstehenden Ansprüche, **dadurch gekennzeichnet, dass** die Komponente B aus 2,4-, und/oder 2,6-Toluylendiisocyanat (TDI), und/oder modifizierten Polyisocyanaten, die sich von 2,4- und/oder 2,6-TDI ableiten, besteht.

**13.** Polyurethanweichschaumstoff erhältlich durch ein Verfahren gemäß einem der Ansprüche 1 bis 12.

**14.** Verwendung eines Polyurethanweichschaums gemäß Anspruch 13 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

**15.** Verwendung einer Polyolkomponente umfassend oder bestehend aus mindestens einem Polyethercarbonatpolyol A1 mit einer Hydroxylzahl gemäß DIN 53240 von ≥ 150 mg KOH/g bis ≤ 300 mg KOH/g und mindestens einem Polyetherpolyol A2 mit einer Hydroxylzahl gemäß DIN 53240 von ≥ 20 mg KOH/g bis ≤ 250 mg KOH/g, das frei von Carbonateinheiten ist, und einer Komponente B enthaltend Di- und/oder Polyisocyanate, wobei es sich um 2,4- und/oder 2,6-TDI und/oder modifizierte Polyisocyanate, die sich von 2,4- und/oder 2,6-TDI ableiten, oder Mischungen dieser Isocyanate mit anderen Di- und/oder Polyisocyanaten handelt, zur Herstellung von viskoelastischen Polyurethanschaumstoffen, wobei die Polyolkomponente ≥ 50 bis ≤ 100 Gew.-% des Polyethercarbonatpolyols A1 und ≤ 50 bis ≥ 0 Gew.-% des Polyetherpolyols A2 enthält.

## Claims

**1.** Process for producing viscoelastic polyurethane foams by reaction of a component A containing
A1 ≥ 50 to ≤ 100 parts by weight of at least one polyether carbonate polyol having a hydroxyl number according to DIN 53240 of ≥ 150 mg KOH/g to ≤ 300 mg KOH/g,
A2 ≤ 50 to ≥ 0 parts by weight of at least one polyether polyol having a hydroxyl number according to DIN 53240 of ≥ 20 mg KOH/g to ≤ 250 mg KOH/g, wherein the polyether polyol is free from carbonate units,

A3 0.5 to 25 parts by weight, based on the sum of the parts by weight of the components A1 and A2, of water and/or physical propellants,
A4 0 to 10 parts by weight, based on the sum of the parts by weight of the components A1 and A2, of at least one antioxidant
A5 0 to 10 parts by weight, based on the sum of the parts by weight of the components A1 and A2, of adjuvants and additives,
with a component B containing
B di- and/or polyisocyanates, wherein these are 2,4-and/or 2,6-TDI and/or modified polyisocyanates derived from 2,4- and/or 2,6-TDI or
mixtures of these isocyanates with other di- and/or polyisocyanates,
wherein the reaction of the component A with the component B is performed at an isocyanate index of 70 to 130 and wherein all reported parts by weight of the components A1 to A5 are normalized such that the parts by weight A1 + A2 in the composition sum to 100.

2. Process according to Claim 1, **characterized in that** the component A contains ≥ 55 to ≤ 100 parts by weight of the polyether carbonate polyol A1 and ≤ 45 to ≥ 0 parts by weight of the polyether polyol A2, in particular ≥ 60 to ≤ 100 parts by weight of the polyether carbonate polyol A1 and ≤ 40 to ≥ 0 parts by weight of the polyether polyol A2.

3. Process according to Claim 1 or 2, **characterized in that** 100 parts by weight of A1, 0 parts by weight of A2, and other than A1, no further organic polyols are employed.

4. Process according to any of the preceding claims, **characterized in that** the polyether carbonate polyol A1 has a hydroxyl number according to DIN 53240 of > 250 mg KOH/g to ≤ 300 mg KOH/g.

5. Process according to any of the preceding claims, **characterized in that** the polyether carbonate polyol A1 has an average OH functionality of 2.5 to 3.5, in particular of 2.7 to 3.3, preferably of 2.9 to 3.1.

6. Process according to any of the preceding claims, **characterized in that** the polyether carbonate polyol A1 is obtainable by copolymerization of ≥ 2% by weight to ≤ 30% by weight of carbon dioxide and ≥ 70% by weight to ≤ 98% by weight of one or more alkylene oxides in the presence of one or more H-functional starter molecules having an average functionality of ≥ 1 to ≤ 6, preferably ≥ 1 to ≤ 4, particularly preferably ≥ 2 to ≤ 3, wherein the polyether carbonate polyol A1 is especially obtainable using multi-metal cyanide catalysts or double-metal cyanide catalysts.

7. Process according to any of the preceding claims, **characterized in that** the polyether carbonate polyol A1 is obtainable using ethylene oxide and/or propylene oxide, in particular using propylene oxide.

8. Process according to any of the preceding claims, **characterized in that** the polyether carbonate polyol A1 comprises blocks of formula (I) having an e/f ratio of 2:1 to 1:20

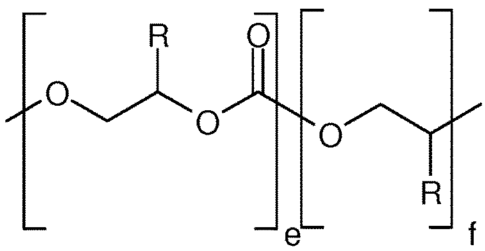

(I),

in particular of 1.5:1 to 1:10.

9. Process according to any of the preceding claims, **characterized in that** the viscoelastic polyurethane foam is a polyurethane soft foam which especially has a ball rebound elasticity according to DIN EN ISO 8307:2007 of 0% to 20%, in particular of 0% to 15%.

10. Process according to any of the preceding claims, **characterized in that** the component A4 contains as component A4.1 0.02-5.0 parts by weight, based on the sum of the parts by weight of the components A1 and A2, of an antioxidant free from amino groups and as component A4.2 0.02-5.0 parts by weight, based on the sum of the parts by weight of the components A1 and A2, of an antioxidant which comprises at least one compound having one or more amino

groups, wherein the total content of the component A4 is in particular 0.04-10.0 parts by weight based on the sum of the parts by weight of the components A1 and A2.

11. Process according to Claim 10, **characterized in that** the antioxidant A4.1 comprises

i) phenol derivatives,
ii) lactones,
iii) phosphorus derivatives

and any desired mixtures of these compounds,
and antioxidant A4.2
comprises at least one compound having one or more secondary amino groups.

12. Process according to any of the preceding claims, **characterized in that** the component B consists of 2,4-and/or 2.6-tolylene diisocyanate (TDI) and/or modified polyisocyanates derived from 2,4- and/or 2,6-TDI.

13. A polyurethane soft foam obtainable by a process according to any of Claims 1 to 12.

14. Use of a polyurethane soft foam according to Claim 13 for production of furniture cushioning, textile inlays, mattresses, automotive seats, headrests, armrests, sponges, foam films for use in automotive parts such as for example headliners, door trims, seat cushions and component parts.

15. Use of a polyol component comprising or consisting of at least one polyether carbonate polyol A1 having a hydroxyl number according to DIN 53240 of ≥ 150 mg KOH/g to ≤ 300 mg KOH/g and at least one polyether polyol A2 having a hydroxyl number according to DIN 53240 of ≥ 20 mg KOH/g to ≤ 250 mg KOH/g which is free from carbonate units and a component B containing di-and/or polyisocyanates, wherein these are 2,4- and/or 2,6-TDI and/or modified polyisocyanates derived from 2,4- and/or 2,6-TDI or mixtures of these isocyanates with other di- and/or polyisocyanates, for production of viscoelastic polyurethane foams, wherein the polyol component contains ≥ 50% to ≤ 100% by weight of the polyether carbonate polyol A1 and ≤ 50% to ≥ 0% by weight of the polyether polyol A2.

## Revendications

1. Procédé pour la préparation de mousses de polyuréthane viscoélastiques par transformation d'un composant A contenant

A1 ≥ 50 à ≤ 100 parties en poids d'au moins un polyéthercarbonatepolyol doté d'un indice d'hydroxyle selon la norme DIN 53240 de ≥ 150 mg de KOH/g à ≤ 300 mg de KOH/g,
A2 ≤ 50 à ≥ 0 partie (s) en poids d'au moins un polyétherpolyol doté d'un indice d'hydroxyle selon la norme DIN 53240 de ≥ 20 mg de KOH/g à ≤ 250 mg de KOH/g, le polyétherpolyol étant exempt de motifs carbonate,
A3 0,5 à 25 partie (s) en poids, par rapport à la somme des parties en poids des composants A1 et A2, d'eau et/ou d'un agent propulseur physique,
A4 0 à 10 partie (s) en poids, par rapport à la somme des parties en poids des composants A1 et A2, d'au moins un antioxydant,
A5 0 à 10 partie (s) en poids, par rapport à la somme des parties en poids des composants A1 et A2, d'auxiliaires et d'additifs,

avec un composant B contenant

B des diisocyanates et/ou des polyisocyanates, qui sont le 2,4-TDI et/ou le 2,6-TDI et/ou des polyisocyanates modifiés issus de 2,4-TDI et/ou de 2,6-TDI, ou des mélanges de ces isocyanates avec d'autres diisocyanates et/ou polyisocyanates,

la transformation du composant A avec le composant B étant mise en œuvre à un indice d'isocyanate de 70 à 130 et toutes les données des parties en poids des composants A1 à A5 étant normées de telle façon que la somme des parties en poids A1 + A2 dans la composition donne 100.

2. Procédé selon la revendication 1, **caractérisé en ce que** le composant A contient ≥ 55 à ≤ 100 parties en poids du

polyéthercarbonatepolyol A1 et ≤ 45 à ≥ 0 partie (s) en poids du polyétherpolyol A2, en particulier contient ≥ 60 à ≤ 100 parties en poids du polyéthercarbonatepolyol A1 et ≤ 40 à ≥ 0 partie(s) en poids du polyétherpolyol A2.

**3.** Procédé selon la revendication 1 ou 2, **caractérisé en ce que** 100 parties en poids de A1 et 0 partie en poids de A2 sont utilisées et mis à part A1, aucun autre polyol organique n'est utilisé.

**4.** Procédé selon l'une quelconque des revendications précédentes, **caractérisé en ce que** le polyéthercarbonatepolyol A1 présente un indice d'hydroxyle selon la norme DIN 53240 > 250 mg de KOH/g à ≤ 300 mg de KOH/g.

**5.** Procédé selon l'une quelconque des revendications précédentes, **caractérisé en ce que** le polyéthercarbonatepolyol A1 présente une fonctionnalité moyenne de OH de 2,5 à 3,5, en particulier de 2,7 à 3,3, de préférence de 2,9 à 3, 1.

**6.** Procédé selon l'une quelconque des revendications précédentes, **caractérisé en ce que** le polyéthercarbonatepolyol A1 peut être obtenu par copolymérisation de ≥ 2 % en poids à ≤ 30 % en poids de dioxyde de carbone et de ≥ 70 % en poids à ≤ 98 % en poids d'un ou plusieurs oxydes d'alkylène en présence d'une ou plusieurs molécules de départ fonctionnalisées par H dotées d'une fonctionnalité moyenne de ≥ 1 à ≤ 6, préférablement ≥ 1 à ≤ 4, particulièrement préférablement ≥ 2 à ≤ 3, le polyéthercarbonatepolyol A1 pouvant en particulier être obtenu par utilisation de catalyseurs de type cyanure polymétallique ou de catalyseurs de type cyanure bimétallique.

**7.** Procédé selon l'une quelconque des revendications précédentes, **caractérisé en ce que** le polyéthercarbonatepolyol A1 peut être obtenu par utilisation d'oxyde d'éthylène et/ou d'oxyde de propylène, en particulier par utilisation d'oxyde de propylène.

**8.** Procédé selon l'une quelconque des revendications précédentes, **caractérisé en ce que** le polyéthercarbonatepolyol A1 présente des blocs selon la formule (I) avec un rapport e/f de 2:1 à 1:20

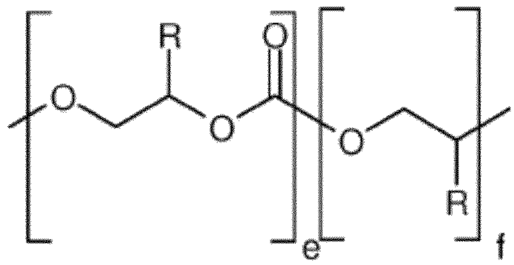

(I),

en particulier de 1,5:1 à 1:10.

**9.** Procédé selon l'une quelconque des revendications précédentes, **caractérisé en ce que** la mousse de polyuréthane viscoélastique est une mousse souple de polyuréthane qui présente en particulier une élasticité de retour à billes selon la norme DIN EN ISO 8307:2007 de 0 % à 20 %, en particulier de 0 % à 15 %.

**10.** Procédé selon l'une quelconque des revendications précédentes, **caractérisé en ce que** le composant A4 contient, en tant que composant A4.1, 0,02 à 5,0 partie(s) en poids, par rapport à la somme des parties en poids des composants A1 et A2, d'un antioxydant, qui est exempt de groupes amino, et en tant que composant A4.2, 0,02 à 5,0 partie (s) en poids, par rapport à la somme des parties en poids des composants A1 et A2, d'un antioxydant, qui comprend au moins un composé doté d'un ou plusieurs groupes amino, la teneur totale en composant A4 étant en particulier de 0,04 à 10,0 partie(s) en poids, par rapport à la somme des parties en poids des composants A1 et A2.

**11.** Procédé selon la revendication 10, **caractérisé en ce que** l'antioxydant A4.1 comprend

i) des dérivés de phénol,
ii) des lactones
iii) des dérivés du phosphore

ainsi que de quelconques mélanges de ces composés,
et l'antioxydant A4.2
comprend au moins un composé doté d'un ou plusieurs groupes amino secondaires.

**12.** Procédé selon l'une quelconque des revendications précédentes, **caractérisé en ce que** le composant B est constitué de 2,4-toluènediisocyanate et/ou de 2,6-toluènediisocyanate (TDI), et/ou de polyisocyanates modifiés issus de 2,4-TDI et/ou de 2, 6-TDI.

**13.** Mousse souple de polyuréthane pouvant être obtenue par un procédé selon l'une quelconque des revendications 1 à 12.

**14.** Utilisation d'une mousse souple de polyuréthane selon la revendication 13 pour la fabrication de rembourrages de meubles, de carcasses textiles, de matelas, de sièges automobiles, d'appuis-tête, d'accoudoirs, d'éponges, de feuilles de mousse pour une utilisation dans des éléments automobiles comme par exemple des pavillons, des habillages de portes latérales, des coussins de sièges et des composants.

**15.** Utilisation d'un composant de polyol comprenant ou étant constitué d'au moins un polyéthercarbonatepolyol A1 doté d'un indice d'hydroxyle selon la norme DIN 53240 de ≥ 150 mg de KOH/g à ≤ 300 mg de KOH/g et d'au moins un polyétherpolyol A2 doté d'un indice d'hydroxyle selon la norme DIN 53240 de ≥ 20 mg de KOH/g à ≤ 250 mg de KOH/g, qui est exempt de motifs carbonate, et d'un composant B contenant des diisocyanates et/ou des polyisocyanates, qui sont le 2,4-TDI et/ou le 2,6-TDI et/ou des polyisocyanates modifiés issus de 2,4-TDI et/ou de 2,6-TDI, ou des mélanges de ces isocyanates avec d'autres diisocyanates et/ou polyisocyanates, pour la préparation de mousses de polyuréthane viscoélastiques, le composant de polyol contenant ≥ 50 à ≤ 100 % en poids du polyéthercarbonatepolyol A1 et ≤ 50 à ≥ 0 % en poids du polyétherpolyol A2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014074706 A1
- EP 355000 A
- EP 1359177 A
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 1874853 A
- EP 1291384 A
- DE 19618786 A
- EP 905180 A
- EP 2687534 A
- US 4382042 A
- EP 0000389 A
- EP 0176013 A
- EP 0007502 A


### In der Beschreibung aufgeführte Nicht-Patentliteratur


- **VIEWEG ; HÖCHTLEN.** Kunststoff-Handbuch. Carl-Hanser-Verlag, 1993, vol. VII, 139-265
- Kunststoff-Handbuch. Carl-Hanser-Verlag, 1993, vol. VII
- **PETER P. KLEMCHUCK.** Ullmanns's Encyclopedia of Industrial Chemistry. Wiley VCH-Verlag, 2012, vol. 4, 162 ff
- **G. OERTEL.** Kunststoff-Handbuch. Carl-Hanser-Verlag, 1993, vol. VII, 104-127
- **W. SIEFKEN.** Justus Liebigs Annalen der Chemie. vol. 562, 75-136